# EUROPÄISCHE PATENTSCHRIFT

(11) **EP 2 638 119 B1**
(45) Veröffentlichungstag und Bekanntmachung des Hinweises auf die Patenterteilung: **30.05.2018**
(21) Anmeldenummer: 11779148.3
(22) Anmeldetag: 27.10.2011
(51) Int. Cl.: C09J 7/00, C09J 123/26, C09J 153/02, C09J 151/06

(54) **HAFTKLEBMASSEN FÜR FEUCHTIGKEITSUNEMPFINDLICHE VERKLEBUNGEN**
PRESSURE-SENSITIVE ADHESIVES FOR MOISTURE-INSENSITIVE BONDS
MASSES DE COLLE AUTOADHÉSIVE POUR DES COLLAGES INSENSIBLES À L'HUMIDITÉ

(30) Priorität: 12.11.2010 DE 102010043853
(43) Veröffentlichungstag der Anmeldung: 18.09.2013
(73) Patentinhaber: tesa SE, 22848 Norderstedt (DE)
(72) Erfinder: STEEN, Alexander, 53175 Bonn (DE); KRAWINKEL, Thorsten, 22457 Hamburg (DE)
(86) Internationale Anmeldenummer: PCT/EP2011/068826
(87) Internationale Veröffentlichungsnummer: WO 2012/062588

(56) Entgegenhaltungen:
- EP-A1- 1 715 016
- EP-A1- 2 341 116
- WO-A1-99/67330
- WO-A1-2006/113180
- WO-A2-2008/013661
- JP-A- 10 251 357
- US-A- 5 500 464

## Beschreibung

Die Erfindung betrifft Klebemassen für ein- oder doppelseitig haftklebrige Klebestreifen, welche insbesondere auf Glas und keramischen Oberflächen auch unter Feuchtigkeit oder Wassereinwirkung hohe Halteleistungen aufweisen.

Sowohl im Haushalt als auch in Industrieanwendungen wird häufig auf Glas oder Keramik verklebt, da dieses ein sehr stabiler und glatter Untergrund ist, der im trockenen Zustand eine hohe Halteleistung ermöglicht.

Die Oberflächen Keramik und Glas haben gemeinsam, dass sie als hydrophil eingestuft werden können. Hydrophile Untergründe besitzen die Eigenschaft, oftmals eine sehr dünne Schicht adsorbierten Wassers auf der Oberfläche gebunden zu haben, die erst bei sehr hohen Temperaturen entfernt werden kann. Diese Schicht kann besonders bei hoher Luftfeuchtigkeit oder Einwirkung von Wasser weiteres Wasser aufnehmen. Diese Schicht kann die Verklebungsleistung eines darauf aufgebrachten Klebebands bis hin zum vollständigen Versagen der Verklebung beeinträchtigen.

Industrielle Lösungen für das Problem des mangelhaften Haftuntergrundes sind bekannt. So werden auf Gläser vor einer Verklebung Haftvermittler aufgetragen, die die Oberfläche hydrophobieren und die genannte Wasserschicht damit eliminieren. Für die Hydrophobierung werden Organosilane eingesetzt. Am häufigsten finden dabei solche der allgemeinen Formel

(RO)₃Si-(CH₂)ₙ-X

Verwendung mit R = CH₃ oder C₂H₅,
n = 3 und
einer funktionellen Gruppe X.

Nach dem Aufbringen des Silans auf die hydrophile Oberfläche wird eine kovalente Bindung zwischen Oberfläche und Silan ausgebildet. Wenn die Oberfläche vollständig silanisiert wird, ist der oben beschriebene Wasserfilm entfernt und kann auch nicht mehr gebildet werden, so dass das Wasser nicht mehr die Möglichkeit hat, hinter die Verklebung zu laufen.

Weiterhin können diese Silane in reaktive und mäßig reaktive unterteilt werden. Reaktive Silane führen innerhalb von wenigen Minuten zu einer effektiven Hydrophobierung einer Oberfläche, ein Effekt, der mit mäßig reaktiven Silanen erst nach Stunden erreicht wird. Der Vorteil mäßig reaktiver Silane ist allerdings ihre hohe Lagerstabilität von mehr als sechs Monaten in Lösung. In die Gruppe der reaktiven Silane fällt zum Beispiel γ-Aminopropyl-triethoxysilan. 3-Glycidoxypropyltrimethoxysilan ist dahingegen als mäßig reaktiv einzustufen.

In der WO 2005/040296 A1 ist sodann die Anwendung einer Lösung von 3-Glycidoxypropyltrimethoxysilan zur Verbesserung der Verklebung von Acrylat-Klebemassen auf Glasoberflächen gezeigt. In dieser Anwendung wird der Kontakt zwischen Klebemasse und Oberfläche hergestellt, bevor das Lösungsmittel verdampft ist, um so eine kovalente Anbindung des Silans sowohl an die Glasoberfläche als auch an die Klebmasse zu erreichen. Nach der Herstellung des Kontakts muss 72 Stunden gewartet werden, bevor eine Belastung der Verklebung erfolgen kann.
Das in WO 2005/040296 A1 dargestellte Vorgehen ist akzeptabel, wenn die Wartezeit von 72 Stunden eingehalten werden kann. In vielen Fällen führt diese Wartezeit aber zu einer Verzögerung der Produktion.

Trotzdem ist das zweistufige Verfahren umständlich, es wäre einfacher auf den Primerungsschritt verzichten zu können.
Dieses ist möglich bei der Verwendung von Klebemassen auf der Basis von Silikonen, die deutlich geringere Empfindlichkeit gegenüber Wasser zeigen. Allerdings sind Silikone relativ teuer und werden deshalb gerade im Klebebandbereich nur für Spezialanwendungen eingesetzt. Nachteilig ist auch, dass für eine Abdeckung der Klebmassen besondere fluorsilikonisierte Liner eingesetzt werden müssen, da die normalerweise eingesetzten silikonisierten Liner wegen der hohen Verklebungsfestigkeit auf Silikon nicht funktionieren. Diese Liner sind ebenfalls sehr teuer.

Die WO 2006/113180 A1 beschreibt ein Verfahren zur Herstellung eines thermoplastischen Vulkanisats, umfassend: a) das Mischen eines thermoplastischen ersten Polymers, eines elastomeren zweiten Polymers, eines Carbonsäureanhydrids, eines Erzeugers von freien Radikalen und eines Klebrigmachers, um eine klebrige erste Mischung bereitzustellen, die das thermoplastische erste Polymer und das gepfropfte elastomere zweite Polymer enthält, wobei der Klebrigmacher darin dispergiert ist, und dann b) das Umsetzen der ersten Mischung mit einem Silan, um ein nicht klebriges thermoplastisches Vulkanisatprodukt bereitzustellen.

Die JP 10251357 A beschreibt ein silanmodifiziertes thermoplastisches Elastomer, das erhalten wird durch Modifizieren von (A) einem epoxidierten thermoplastischen Elastomer auf Styrolbasis, das durch Epoxidieren von Doppelbindungen des Blockcopolymers hergestellt worden ist, wobei das Blockcopolymer einen Polymerblock umfasst, der im Wesentlichen aus einer Verbindung auf Styrolbasis abgeleitet ist, und einen Polymerblock umfasst, der im Wesentlichen abgeleitet ist aus einer konjugierten Dienverbindung, mit (B) (i) einer Silanverbindung der Formel R¹-Si-Y₃, worin R¹ ein carboxylhaltiger Kohlenwasserstoffrest oder ein Kohlenwasserstoffoxyrest ist und mindestens ein Rest Y eine hydrolysierbare organische funktionelle Gruppe ist, oder (ii) einer Silanverbindung der Formel R²-Si-Y₃, worin R² ein Carbonsäureanhydrid-haltiger Kohlenwasserstoffrest ist und mindestens ein Rest Y eine hydrolysierbare organische funktionelle Gruppe ist.

Die WO 99/67330 A1 beschreibt eine Zusammensetzung, umfassend das Reaktionsprodukt von (a) einem ersten Polymer, (b) einem zweiten Polymer, (c) einem Carbonsäureanhydrid; und (d) einem Aminosilan, wobei vor der Zugabe des Aminosilans das Säureanhydrid auf eines der Polymere gepfropft worden ist oder es in eines derselben copolymerisiert worden ist, und wobei die Zusammensetzung einen Gelgehalt zwischen 10 bis 50 Gew.-% aufweist.

Aufgabe ist es daher eine Klebmasse zur Verfügung zu stellen, die eine hohe Halteleistung auf Glas oder Keramik aufweist und auch unter Feuchtigkeits- und Wassereinfluss nur wenig an der Klebkraft einbüßt, ohne dass vorher der Glasuntergrund vorbehandelt werden muss.

Gelöst wird diese Aufgabe durch eine Klebemasse, wie sie im Hauptanspruch niedergelegt ist. Gegenstand der Unteransprüche sind dabei vorteilhafte Weiterbildungen der Klebmasse und Verwendungen derselben:
Demgemäß betrifft die Erfindung eine Haftklebmasse enthaltend ein silanmodifiziertes Polymer entstanden aus der Reaktion
a) eines Säureanhydrid- oder Epoxidgruppen enthaltenden Polymers, wobei die Epoxidgruppen nicht endständig sind, mit
b) einem Silan der folgenden Formel 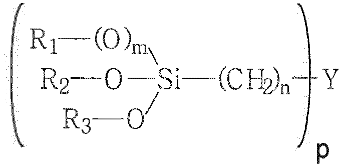 mit
   R₁, R₂, R₃ unabhängig voneinander gewählt aus der Gruppe Methyl, Ethyl, 2-Methoxyethyl, i-Propyl, Butyl
   m = 0 oder 1
   n = 0 bis 12
   p = 1 oder 2
   und für p = 1
   Y = einer funktionellen Gruppe gewählt aus der Gruppe
      Glycidyl, Glycidyloxy, Isocyanato, -NH-CH₂-CH₂-NR₄R₅, -NR₄R₅ (mit R₄ und R₅ unabhängig voneinander gewählt aus der Gruppe H, Alkyl, Phenyl, Benzyl, Cyclopentyl, Cyclohexyl), SH
   oder
   für p = 2
   Y = NH

Eine Haftklebemasse ist eine viskoelastische Masse, die bei Raumtemperatur in trockenem Zustand permanent klebrig und klebfähig bleibt. Die Klebung erfolgt durch leichten Anpressdruck sofort auf fast allen Substraten.
Haftklebmassen basieren häufig auf Acrylaten, Naturkautschuk oder Styrolblockcopolymeren. Besonders Haftklebmassen für doppelseitige Klebebänder bestehen zumeist aus Acrylaten oder Styrolblockcopolymeren, wobei die Halteleistung bei den Acrylaten häufig etwas geringer ist. Gerade unter feuchten Bedingungen zeigen diese ein genau gegenläufiges Verhalten, Acrylathaftklebmassen sind etwas weniger anfällig gegenüber Nässe und Feuchtigkeit als Blockcopolymermassen. Zumindest die Blockcopolymermassen müssen dabei abgemischt werden mit Klebharzen, um haftklebrig zu sein.
Auch der Aufbau der Klebebänder trägt zur Empfindlichkeit gegenüber Feuchtigkeit bei, so sind harte Klebmassen und Klebebänder mit starren Trägern häufig anfälliger als solche mit sehr flexiblen Trägern. Besonders doppelseitige Klebebänder mit Schaumstoffzwischenträger reagieren empfindlich auf Feuchtigkeit, wenn sie auf hydrophilen Untergründen verklebt werden.

Besonders die Klebmassen, die auf unpolaren Elastomeren basieren wie Poylolefinen oder Styrolblockcopolymeren, zeigen Schwächen bei der Verklebungsfestigkeit unter Einfluss von Luftfeuchtigkeit oder Wasser. Besonders ausgeprägt ist dieses Verhalten bei Verklebungen auf hydrophilen Untergründen wie Glas oder Keramik. Insbesondere bei Feuchtigkeitseinwirkung kurz nach der Verklebung von mittelschweren Gegenständen kommt es häufig zum Versagen der Haftklebestreifen. Die Halteleistung wird unter Feuchtigkeitseinfluss besonders bei denjenigen Haftklebestreifen verringert, die unpolare Klebharze wie Kohlenwasserstoffharze oder Polyterpenharze enthalten.

Ein Versagen der Verklebung tritt bei einer reinen Schälbelastung und besonders bei einer Kippscherbelastung (bei der ein Drehmoment wirksam ist, wie zum Beispiel bei der Verklebung eines Hakens mit einem bestimmten Hebel, an den etwas angehängt wird) deutlich stärker auf, als bei einer reinen Scherbelastung.

In DE 102 24 842 A1 ist eine Klebmasse auf Basis von Styrolblockcopolymeren beschrieben, die durch Zusatz von Superabsorbern eine deutlich verbesserte Halteleistung auf hydrophilen Untergründen wie Glas unter Feuchtigkeit besitzt. Trotzdem ist die Verklebungsleistung bei lange anhaltender sehr hoher Luftfeuchtigkeit aber insbesondere unter fließendem Wasser nicht ausreichend.

Im Folgenden wird nochmals die Umsetzung der Elastomere mit den Silanen beschrieben.
Die Epoxidgruppen enthaltenden Polymere, bei denen die Epoxidgruppen nicht endständig sind, werden dabei bevorzugt durch Reaktion von Peroxiden oder Peroxycarbonsäuren mit noch in der Hauptkette des unmodifizierten Polymers vorhandenen Doppelbindungen hergestellt. Die am häufigsten verwendeten Epoxidierungsmittel sind dabei Wasserstoffperoxid mit unterschiedlichen Katalysatoren wie zum Beispiel tert.-Butylhydroperoxyd, meta-Chlorperbenzoesäure (MCPBA), oder Peroxyameisen- beziehungsweise Peroxyessigsäure, die in situ hergestellt werden. Polymere mit endständigen Epoxidgruppen sind meistens niedermolekular und besitzen nur zwei Epoxidgruppen, es können daher nicht genügend Silangruppen angeknüpft werden.
Epoxidierbare Polymere mit Doppelbindung in der Hauptkette können zum Beispiel Polymere mit Butadien- oder Isopren-Monomeren sein wie Polybutadien, Polyisopren, Styrolbutadien-Kautschuke, Blockcopolymere aus Vinylaromaten und Isopren oder Butadien, wie sie weiter unten näher beschrieben werden, Blockcopolymere aus Isopren und Butadien, Nitrilkautschuk, ABS oder ähnliche. Auch Polymere aus Ethylen-Propylen mit einem weiteren Monomer mit zwei Doppelbindungen, zum Beispiel EPDM kann eingesetzt werden.

Als Säureanhydrid enthaltende Polymere im Sinne der Erfindung können sowohl solche eingesetzt werden, die durch Modifizierung fertiger Polymere mit zum Beispiel Maleinsäureanhydrid unter radikalischen Bedingungen hergestellt wurden, als auch solche, die anhydridhaltige Monomere in die Hauptkette eingebaut haben.
Im Falle der modifizierten Polymere können eine Reihe von Polyolefinen wie Polyethylen oder Polypropylen aber auch Poly-alpha-olefine, polymerisiert aus Ethylen und mindestens einem weiteren Alphaolefin, Polybutylene wie Polyisobutylen sowie auch Blockcopolymere aus Ethylen und Propylen eingesetzt werden. Auch Blockcopolymere aus einem Vinylaromaten und einem Dien sind verwendbar, wobei der Hauptteil der verbleibenden Doppelbindungen hydriert ist. Bei allen diesen Polymeren ist der Gehalt an Doppelbindungen bevorzugt sehr niedrig, da es bei der Reaktion von den Polymeren mit den Säureanhydriden sonst leicht zu unerwünschten Vernetzungsreaktionen kommen kann.

Bevorzugt werden hier Blockcopolymere enthaltend Polymerblöcke überwiegend gebildet von Vinylaromaten (A-Blöcke), bevorzugt Styrol, und solche überwiegend gebildet durch Polymerisation von 1,3-Dienen (B-Blöcke), bevorzugt Butadien, Isopren oder einer Mischung aus beiden Monomeren, eingesetzt. Diese B-Blöcke weisen üblicherweise eine geringe Polarität auf. Sowohl Homo- als auch Copolymerblöcke sind als B-Blöcke bevorzugt nutzbar. Auch Blockcopolymere mit Polyisobutylen in der Hauptkette sind verwendbar.

Die aus den A- und B-Blöcken resultierenden Blockcopolymere können gleiche oder unterschiedliche B-Blöcke enthalten, die teilweise, selektiv oder vorzugsweise vollständig hydriert sein können. Die Blockcopolymere können lineare A-B-A Strukturen aufweisen. Einsetzbar sind ebenfalls Blockcopolymere von radialer Gestalt sowie sternförmige und lineare Multiblockcopolymere. Als weitere Komponenten können A-B Zweiblockcopolymere vorhanden sein. Blockcopolymere von Vinylaromaten und Isobutylen sind ebenfalls erfindungsgemäß einsetzbar. Sämtliche der vorgenannten Polymere können alleine oder im Gemisch miteinander genutzt werden.

Verwendet werden können auch Blockcopolymere, die neben den oben beschriebenen Blöcken A und B zumindest einen weiteren Block enthalten, wie zum Beispiel A-B-C-Blockcoplymere.

Denkbar ist auch die Verwendung der oben genannten B-Blöcke mit A-Blöcken von anderer chemischer Natur, die eine Glasübergangstemperatur oberhalb der Raumtemperatur zeigen, wie zum Beispiel Polymethylmethacrylat.

In einer vorteilhaften Ausführungsform weisen die Blockcopolymere einen Polyvinylaromatenanteil von 10 Gew.-% bis 35 Gew.-% auf.

Für die Herstellung einer Haftklebemasse beträgt der Anteil der Vinylaromatenblockcopolymere in Summe bezogen auf die gesamte Haftklebmasse bevorzugt mindestens 30 Gew.-%, vorzugsweise mindestens 40 Gew.-%, weiter bevorzugt mindestens 45 Gew.-%.

Ein zu geringer Anteil an Vinylaromatenblockcopolymeren hat zur Folge, dass die Kohäsion der Haftklebemasse relativ niedrig ist. Der maximale Anteil der Vinylaromatenblockcopolymere in Summe bezogen auf die gesamte Haftklebmasse beträgt maximal 80 Gew.-%, bevorzugt maximal 70 Gew.-%. Ein zu hoher Anteil an Vinylaromatenblockcopolymere hat wiederum zur Folge, dass die Haftklebemasse kaum noch haftklebrig ist.

Zumindest ist ein Teil der eingesetzten Polymere dabei säureanhydridmodifiziert beziehungsweise epoxidiert.
Dabei erfolgt die Anhydridmodifizierung hauptsächlich durch radikalische Pfropfcopolymerisation von ungesättigten Säureanhydriden, wie zum Beispiel Maleinsäureanhydrid, Citraconsäureanhydrid, Dimethylmaleinsäureanhydrid, Ethyl- und Diethylmaleinsäureanhydrid, Chlor- und Dichlormaleinsäureanhydrid, Phenylmaleinsäureanhydrid, Itaconsäureanhydrid, Methylitaconsäureanhydrid, Aconitsäureanhydrid, Nadicanhydrid, Methylnadicanhydrid, Tetrahydrophthalsäureanhydrid oder Methyltetrahydrophthalsäureanhydrid, bevorzugt Maleinsäureanhydrid. Bevorzugt liegt der Anteil an Säure beziehungsweise Säureanhydrid zwischen 0,5 und 4 Gewichtsprozenten bezogen auf das gesamte Blockcopolymer.

Polymere, bei denen das Säureanhydrid direkt mit in die Polymerkette eingebaut sind, sind zum Beispiel Polymere aus Styrol und Maleinsäureanhydrid, meistens alternierend, wie zum Beispiel SMA-Polymere der Firma Sartomer, Polymere aus Ethylen und Maleinsäureanhydrid, wie zum Beispiel Gantrez-Polymere der Firma ISP oder Isobutylen und Maleinsäureanhydrid, wie zum Beispiel Isobam der Firma Kuraray, um nur einige wenige zu nennen

Um silanisierte Polymere zu erhalten, müssen die Epoxid- oder Anhydridgruppen enthaltenen Polymere mit einem Silan reagieren.
Dazu werden Silane der folgenden Formel eingesetzt: 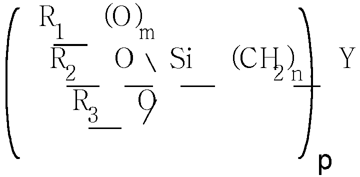 mit
R_{1,} R₂, R₃ unabhängig voneinander gewählt aus der Gruppe Methyl, Ethyl, 2-Methoxyethyl, i-Propyl, Butyl
m = 0 oder 1
n = 0 bis 12
p = 1 oder 2
und für p = 1
Y = einer funktionellen Gruppe gewählt aus der Gruppe
   Glycidyl, Glycidyloxy, Isocyanato, -NH-CH₂-CH₂-NR₄R₅, -NR₄R₅ (mit R₄ und R₅ unabhängig voneinander gewählt aus der Gruppe H, Alkyl, Phenyl, Benzyl, Cyclopentyl, Cyclohexyl), SH
oder
für p = 2
Y = NH

Besonders bevorzugt sind dabei Silane mit einer Amino- oder Sulfidgruppe.
Die Reaktion mit den Polymeren kann dabei spontan in Lösung geschehen oder durch Erhitzen und Zugabe von Katalysatoren, wie zum Beispiel Säuren, beschleunigt werden.

Um aus diesen silanmodifizierten Polymeren Haftklebemassen zu erhalten, werden bevorzugt Klebrigmacher eingesetzt. Hierzu dienen Klebharze, die mit dem silanmodifizierten Polymer bei den Vinylaromatenblockcopolymeren mit den Weichblöcken verträglich sind. Geeignete Klebharze sind unter anderem vorzugsweise nicht hydrierte, partiell- oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder Cg-Monomerströmen, Polyterpenharze auf Basis von α-Pinen und/oder β-Pinen und/oder δ-Limonen, hydrierte Polymerisate von bevorzugt reinen C₈- und Cg-Aromaten. Vorgenannte Klebharze können sowohl allein als auch im Gemisch eingesetzt werden.
Dabei können sowohl bei Raumtemperatur feste als auch flüssige Harze zum Einsatz kommen.

Gemäß einer bevorzugten Ausführungsform enthält die Klebemasse Klebrigmacher, vorzugsweise zu einem Anteil von bis 60 Gew.-% bezogen auf die Gesamtmenge.

Als natürliche Wachse können pflanzliche und tierische Wachse eingesetzt werden. Synthetische Wachse sind zum Beispiel Polyalkylenwachse, Petroleumwachse oder Polyolefinwachse auf der Basis von Polyethylen, Polypropylen oder deren Gemischen. Auch modifizierte Wachse wie Montanesterwachse oder Sasolwachse, können eingesetzt werden.

Als weitere Additive können typischerweise genutzt werden:
- Plastifizierungsmittel wie zum Beispiel Weichmacheröle oder niedermolekulare flüssige Polymere wie zum Beispiel niedermolekulare Polybutene
- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel
- Endblockerstärkerharze sowie
- gegebenenfalls weitere nicht modifizierte Polymere von bevorzugt elastomerer Natur; entsprechend nutzbare Elastomere beinhalten unter anderem solche auf Basis reiner Kohlenwasserstoffe, zum Beispiel ungesättigte Polydiene, wie natürliches oder synthetisch erzeugtes Polyisopren oder Polybutadien, sowie chemisch im wesentlichen gesättigte Elastomere, wie zum Beispiel gesättigte Ethylen-Propylen-Copolymere, α-Olefincopolymere, Polyisobutylen, Butylkautschuk, Ethylen-Propylenkautschuk.

Es sei erwähnt, dass die erfindungsgemäße Klebemasse auch ohne die aufgeführten Wachse und/oder Additive je nach Anwendungsfall geeignet ist, sei es dass die Wachse und/oder Additive in ihrer Gesamtheit, in beliebiger Kombination oder jeweils einzeln weggelassen werden.
Insbesondere verzichtet die erfindungsgemäße Klebemasse auf anorganische Silikate und Alumosilikate.

Die Herstellung und Verarbeitung von Haftklebemassen kann aus Lösung, Dispersion sowie aus der Schmelze erfolgen. Bevorzugte Herstell- und Verarbeitungsverfahren erfolgen aus Lösung sowie aus der Schmelze.

Wenn das Silan nur mit dem Elastomer reagieren kann, kann die Reaktion auch gleichzeitig mit der Mischung der weiteren Rohstoffe stattfinden, so dass gerade bei Verarbeitung aus der Lösung das Säureanhydrid- oder Epoxidgruppen enthaltene Polymer gleichzeitig mit dem Silan und allen weiteren Stoffen in Lösung gebracht wird und die Reaktion dann während des Lösungsprozesses stattfindet.

Erfindungsgemäße Haftklebemassen können sowohl für einseitig als auch für beidseitig haftklebrige Produkte wie Klebebänder genutzt werden.
Das Klebeband kann nur aus einer Schicht Klebemasse bestehen, also einlagig sein, das Klebeband kann aber auch einen Träger aufweisen, auf ein- oder beidseitig eine Schicht (oder gegebenenfalls mehrere Schichten) Klebemasse aufgebracht ist.
Als Träger können alle bekannten Träger eingesetzt werden, zum Beispiel wie Gelege, Gewebe, Gewirke, Vliese, Folien, Papiere, Tissues, Schäume und geschäumte Folien. Geeignete Folien sind aus Polypropylen, vorzugsweise orientiertem, Polyester, Hart- und Weich-PVC. Bevorzugt sind Polyolefin-, Polyurethan-, EPDM- und Chloroprenschaum. Der Begriff Polyethylen schließt LDPE, aber auch Ethylencopolymere wie LLDPE und EVA ein. Insbesondere sind vernetzte Polyethylenschäume oder viskoelastische Träger geeignet. Letztere sind vorzugsweise aus Polyacrylat, besonders bevorzugt gefüllt mit hohlen Körpern aus Glas oder Polymeren. Die Träger können vor dem Zusammenbringen mit der Klebemasse durch Primerung oder physikalische Vorbehandlung wie Corona oder Ätzen vorbereitet werden.
Der Träger kann auch mehrlagig sein, beispielsweise durch das Zusammenlaminieren unterschiedlicher Schichten oder das Coextrudieren von Schichten.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.
Das Klebeband kann in festen Längen wie zum Beispiel als Meterware oder aber als Endlosware auf Rollen (archimedische Spirale) zur Verfügung gestellt werden.

### Prüfmethoden

### Für Haftklebmassen

Im Gegensatz zu der üblichen Prüfung zur Wasserresistenz einer Verklebung besonders im Bereich der Haftklebstoffe und Klebebänder wird kein Schältest vor und nach Wasserlagerung durchgeführt, da in diesem Falle die Klebung nicht belastet ist, das Wasser also deutlich schwieriger in die Verklebungsfuge eindringen kann.

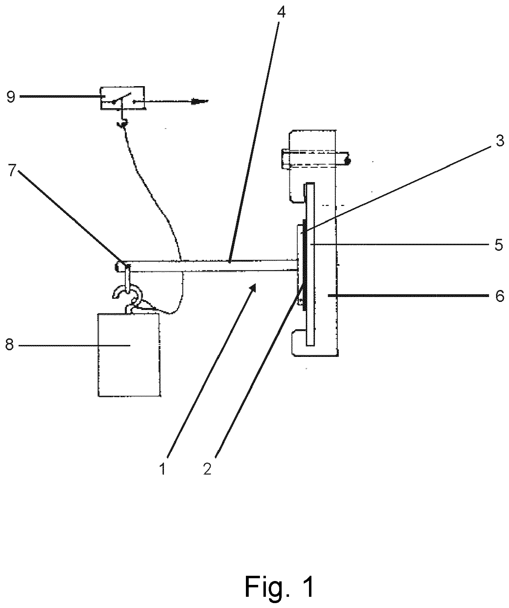

Anhand der Figur 1 soll im Folgenden der Versuchsaufbau näher beschrieben werden, mit dem die hohe mechanische Belastbarkeit des Klebestreifens getestet wird.

Mittels eines stempelförmigen Wandhakens 1 wird der Klebestreifen 2 von einer Größe von 4 x 2 cm einer Biegemomentbeanspruchung unterworfen. Der Wandhaken 1 besteht aus einer quadratischen Stahlplatte 3 aus V2A-Stahl mit 40 mm Kantenlänge und 3 mm Dicke. In der Mitte der Stahlplatte 3 ist ein Rundstab 4 als Hebelarm befestigt, welcher eine Länge von 30 mm und einen Durchmesser von 5 mm aufweist.
Der Klebestreifen 2 von einer Größe von 4 x 2 cm wird auf einer Glasplatte 5 verklebt und mit einer 2 kg Rolle angedrückt. Anschließend wird die Stahlplatte 3 auf den Klebestreifen 2 geklebt und mit 10 kg Gewicht angedrückt. Die Glasplatte 5 wird senkrecht gestellt und nach einer Wartezeit von 1 h wird der Rundstab 4 im Abstand von 30 mm von der Glasplatte 5 mit einem Gewicht 8 von 300 g belastet, und zwar in dem Punkt 7, welcher genau 30 mm Abstand zu der verklebten Seite der Stahlplatte 3 des Wandhakens 1 hat. Die Glasplatte 5 befindet sich in einer entsprechend geformten Halterung 6.

Die verklebten Flächen der Stahlplatte 3 müssen völlig eben und mittels Schmirgelpapier (FEPA-Körnung 240) feingeschliffen sein. Zur Bewahrung der Oberfläche und Vermeidung von Fettspuren auf der Oberfläche ist die Stahlplatte 3 in Toluol zu lagern. Vor Verwendung muss die Stahlplatte 3 mit Aceton gereinigt und danach fünf Minuten abgelüftet werden. Die Glasplatte wird einmal mit Wasser gewaschen, getrocknet und anschließend noch mal mit Aceton gereinigt.
Nun wird die Verklebung bei 35 °C und 85 % r.F. gelagert und in Abständen von 24 Stunden mit Wasser beträufelt und die Haltedauer in Stunden notiert.

Versagt eine der Verklebungen des Klebebandes 2 mit der Stahlplatte 3 oder der Glasplatte 5 fällt der Wandhaken 1 mitsamt dem Gewicht 8 herab. Dadurch wird ein Kontakt in einem Kontaktgeber 9 geschlossen, so dass die Zeitspanne zwischen Testbeginn und Versagen einer der Verklebungen - die Haltezeit - genau angezeigt wird.

### Beispiele

### Beispiel 1

100 Teile Kraton FG 1901 (hydriertes Styrolblockcopolymer, SEBS, mit 30 Gew.-% Styrol und ohne Zweiblock, modifiziert mit ca. 1,7 Gew.-% Maleinsäureanhydrid der Firma Kraton) und 4,4 Teile Aminopropyltriethoxysilan werden in wasserfreiem Toluol gelöst. Nachdem das Elastomer vollständig aufgelöst ist, werden 100 Teile Regalite R 1100 (hydriertes C₉-Harz der Firma Eastman) zugegeben.

Die homogene Lösung wird dann auf einem silikonisierten Trennpapier so ausgestrichen, dass nach dem Trocknen bei 110 °C ein Masseauftrag von 50 g/m² entsteht. Anschließend wird der Klebestreifen wie oben beschrieben auf seine Festigkeit unter Feuchtigkeitseinfluss untersucht.

### Beispiel 2

Ein Ethylen-Propylen-Copolymer, Vistamaxx 6202 der Firma Exxon, wird in der Schmelze mit 1 Gew.-% Maleinsäureanhydrid mit Hilfe eines Radikalstarters gepfropft. Anschließend werden 100 Teile dieses modifizierten Polymers und 2,2 Teile Aminopropyltriethoxysilan in einem Schmelzkneter vermischt. Nachdem das Elastomer homogen aufgeschmolzen ist, werden 100 Teile Regalite R 1100 (hydriertes C₉-Harz der Firma Eastman) und 120 Teile des Öls Ondina 931 der Firma Shell, ein medizinisches Weißöl mit einem hohen paraffinischen Anteil, zugeben. Die Klebmasse wird mit Hilfe eines Zwei-Walzenwerks wieder auf einem silikonisierten Trennpapier beschichtet mit einem Auftragsgewicht von 50 g/m². Die Prüfung findet wie oben beschrieben statt.

### Beispiel 3

100 Teile Epofriend AT-501, ein epoxidiertes SBS der Firma Daicel, und 4 Teile Aminopropyltriethoxysilan werden in einem Schmelzkneter bei 160°C vermischt. Nachdem das Elastomer homogen aufgeschmolzen und 30 Minuten geknetet worden ist, werden 80 Teile Pentalyn H (Kolophoniumester der Firma Eastman) und 20 Teile Wingtack 10 (flüssiges C₅-Harz der Firma Cray Valley) zugegeben.

Die Klebmasse wird mit Hilfe eines Zwei-Walzenwerks wieder auf einem silikonisierten Trennpapier beschichtet mit einem Auftragsgewicht von 50 g/m². Anschließend wird der Klebestreifen wie oben beschrieben auf seine Festigkeit unter Feuchtigkeitseinfluss untersucht.

### Vergleichsbeispiel 4

Es wird die gleiche Klebmasse hergestellt wie im Beispiel 1, nur diesmal ohne das Silan.

### Vergleichsbeispiel 5

Es wird die gleiche Klebmasse hergestellt wie im Beispiel 2, nur diesmal ohne das Silan.

### Beispiel 6 (nicht erfindungsgemäß)

Eine Schmelzklebmasse, die bei Raumtemperatur nicht tackig ist, wird hergestellt aus 100 Teilen Vistamaxx 2330 (Ethylen-Propylen-Copolymer der Firma Exxon), das wie im Beispiel 2 beschrieben säureanhydridmodifiziert wird. Im Schmelzkneter werden 2 Teile des Aminopropyltriethoxysilans zugegeben. Nachdem alles gut homogenisiert wurde, kommen noch 50 Teile Escorez 5300, ein hydriertes C₅-Harz der Firma Exxon, dazu.

Die Klebmasse wird wie oben beschrieben mit einem Zwei-Walzenwerk auf 50 µm beschichtet. Die Verklebung findet in diesem Fall nicht bei Raumtemperatur statt, sondern die Klebmasse wird auf das Glas bei 100 °C auflaminiert, die endgültige Verklebung mit der Stahlplatte findet bei 160 °C und einem Druck von 4 bar statt.

Der Test verläuft analog zu den Haftklebmassen, allerdings mit einer Belastung von 500 g.

### Vergleichsbeispiel 7

Es wird eine identische Schmelzklebmasse wie in Beispiel 6 hergestellt, mit Ausnahme dass kein Silan zugegeben wird.

**Ergebnisse der Verklebungstests**

| Beispiel | Haltedauer in Stunden |
|---|---|
| 1 | > 240 |
| 2 | 126 |
| 3 | > 240 |
| V4 | 8 |
| V5 | 2 |
| 6 | > 240 |
| V7 | 48 |

Wie deutlich zu erkennen ist, sind die Halteleistungen mit den silanmodifizierten Elastomeren deutlich höher als bei den nicht modifizierten Elastomeren.

## Patentansprüche

1. Haftklebmasse enthaltend
ein silanmodifiziertes Polymer entstanden aus der Reaktion
a) eines Säureanhydrid- oder Epoxidgruppen enthaltenden Polymers, wobei die Epoxidgruppe nicht endständig ist, mit
b) einem Silan der folgenden Formel 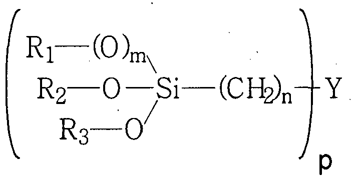 mit
R₁, R₂, R₃ unabhängig voneinander gewählt aus der Gruppe Methyl, Ethyl, 2-Methoxyethyl, i-Propyl, Butyl
m = 0 oder 1
n = 0 bis 12
p = 1 oder 2
und für p = 1
Y = einer funktionellen Gruppe gewählt aus der Gruppe
Glycidyl, Glycidyloxy, Isocyanato, -NH-CH₂-CH₂-NR₄R₅, -NR₄R₅ (mit R₄ und R₅ unabhängig voneinander gewählt aus der Gruppe H, Alkyl, Phenyl, Benzyl, Cyclopentyl, Cyclohexyl), SH
oder
für p = 2
Y = NH

2. Klebmasse nach Anspruch 1,
**dadurch gekennzeichnet, dass**
es sich bei dem Säureanhydrid- oder Epoxidgruppen enthaltenden Polymer handelt um ein
• modifiziertes Vinylaromatenblockcopolymer
• modifiziertes Polyolefin
• Polymer handelt, das unter anderem aus Isopren- und/oder Butadien hergestellt wird, oder
• Polymer handelt, das aus Monomeren mit Säureanhydrid- oder Epoxidgruppen gebildet wird

3. Klebmasse nach Anspruch 1 oder 2,
**dadurch gekennzeichnet, dass**
die Klebemasse Klebrigmacher enthält, vorzugsweise zu einem Anteil von bis 60 Gew.-% bezogen auf die Gesamtmenge.

4. Verwendung einer Klebmasse nach zumindest einem der vorherigen Ansprüche für die Verklebung auf hydrophilen Untergründen.

## Claims

1. Pressure-sensitive adhesive comprising
a silane-modified polymer formed from the reaction
a) of a polymer containing acid anhydride groups or epoxide groups, the epoxide group not being terminal, with
b) a silane of the following formula 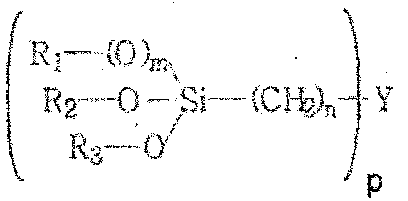 where
R₁, R₂ and R₃ independently of one another are selected from the group of methyl, ethyl, 2-methoxyethyl, isopropyl and butyl
m = 0 or 1
n = 0 to 12
p = 1 or 2
and if p = 1
Y = a functional group selected from the group of glycidyl, glycidyloxy, isocyanato, -NH-CH₂-CH₂-NR₄R₅, -NR₄R₅ (where R₄ and R₅ independently of one another are selected from the group of H, alkyl, phenyl, benzyl, cyclopentyl and cyclohexyl) and SH
or
if p = 2
Y = NH.

2. Adhesive according to Claim 1,
**characterized in that**
the polymer containing acid anhydride groups or epoxide groups is a
• modified vinylaromatic block copolymer
• modified polyolefin
• polymer prepared from monomers including isoprene and/or butadiene, or
• polymer formed from monomers having acid anhydride groups or epoxide groups.

3. Adhesive according to Claim 1 or 2,
**characterized in that**
the adhesive comprises tackifiers, preferably in a fraction of up to 60 wt%, based on the total amount.

4. Use of an adhesive according to at least one of the preceding claims for bonding on hydrophilic substrates.

## Revendications

1. Matériau adhésif sensible à la pression, contenant : un polymère modifié par un silane, formé par la réaction
a) d'un polymère contenant des groupes anhydride d'acide ou époxyde, le groupe époxyde n'étant pas en position terminale, avec
b) un silane de la formule suivante : 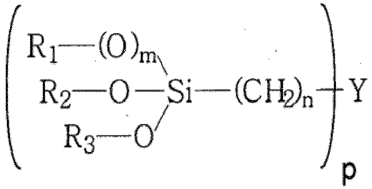
dans laquelle
R₁, R₂, R₃ sont choisis indépendamment les uns des autres dans le groupe constitué par méthyle, éthyle, 2-méthoxy-éthyle, i-propyle, butyle,
m = 0 ou 1,
n = 0 à 12,
p = 1 ou 2,
et, pour p = 1,
Y = un groupe fonctionnel choisi dans le groupe constitué par : glycidyle, glycidyloxy, isocyanato, -NH-CH₂-CH₂-CH₂-NR₄R₅, -NR₄R₅ (avec R₄ et R₅ choisis indépendamment l'un de l'autre dans le groupe constitué par H, alkyle, phényle, benzyle, cyclopentyle, cyclohexyle), SH,
ou
pour p = 2,
Y = NH.

2. Matériau adhésif selon la revendication 1, **caractérisé en ce que** le polymère contenant des groupes anhydride d'acide ou époxyde est
- un copolymère séquencé de composé aromatique de vinyle modifié,
- une polyoléfine modifiée,
- un polymère qui est fabriqué entre autres à partir d'isoprène et/ou de butadiène, ou
- un polymère qui est formé à partir de monomères contenant des groupes anhydride d'acide ou époxyde.

3. Matériau adhésif selon la revendication 1 ou 2, **caractérisé en ce que** le matériau adhésif contient des agents collants, de préférence en une proportion de jusqu'à 60 % en poids, par rapport à la quantité totale.

4. Utilisation d'un matériau adhésif selon au moins l'une quelconque des revendications précédentes pour le collage de substrats hydrophiles.
